# EUROPEAN PATENT SPECIFICATION

(11) **EP 1 712 748 B1**
(45) Date of publication and mention of the grant of the patent: **14.04.2010**
(21) Application number: 05250130.1
(22) Date of filing: 12.01.2005
(51) Int. Cl.: F01L 13/00, F01L 1/18

(54) **Rocker arm arrangement for dual valve timing with single cam lobe**
Kipphebelanordnung für Zweiphase Ventilsteuerungseinrichtung mit Einzelnockenerhebung
Culbuteur permettant deux modes de distribution avec une came unique

(43) Date of publication of application: 18.10.2006
(73) Proprietor: Eaton S.r.l., 10086 Rivarolo Canavese (TO) (IT)
(72) Inventor: Cecur, Majo, 10086 Rivarolo Canavese Torino (IT); Principe, Federico Principe, 10086 Rivarolo C. se, Torino (IT); Scalet Bert, Alessandro M., 10137 Torino (IT); Contarin, Fabiano, 14100 Asti (IT); Church, Kynan L., 10083 Favria Torino (IT)
(74) Representative: Burke, Steven David

(56) References cited:
- EP-A- 0 352 580
- DE-C- 648 807
- GB-A- 2 323 630
- US-A- 2 041 983
- US-A1- 2005 000 498

## Description

### BACKGROUND OF THE DISCLOSURE

The present invention relates to valve control systems for internal combustion engine poppet valves, and more particularly, to such valve control systems which are capable of controlling the length (duration) of the valve event.

As is well known to those skilled in the internal combustion engine art, conventional camshaft and rocker arm type valve gear trains have provided only a "fixed" (i.e., not variable) valve lift (i.e., the opening of the engine poppet valve), as well as a "fixed" valve timing (when the engine poppet valve begins to open and when it closes), and a "fixed" event length or duration (i.e., the time during which the valve is open).

More recently, those skilled in the art have developed a number of different types of camshaft and rocker arm valve control systems which are capable of providing a variable valve event, i.e., to vary one or more of the valve lift, the valve timing, and the event length.

Many such prior art systems have provided for two different valve events, for example, a choice between low lift and high lift. Examples of valve control systems capable of providing for a selection between two different events (such as high lift and low lift) are shown in U.S. Patent Nos. 5,524,580; 5,529,033; and 5,655,488, assigned to the assignee of the present invention and incorporated herein by reference.

Although such "dual event" type valve control systems have performed in a generally satisfactory manner, and have been put into commercial production, one of the problems associated with such dual event valve control systems has been the need to provide two different cam lobe profiles on the camshaft, for example, a low lift profile and a separate high lift profile. As a practical matter, in such valve control systems there has typically been three cam lobe profiles, for example, a low lift profile in the "middle" with identical high lift profiles on either axial side thereof. As is well understood by those skilled in the art, the need to provide multiple cam lobe profiles, which are typically ground to a very precise profile configuration, adds substantially to the overall manufacturing cost of the valve control system, and therefore, of the overall engine. The provision of multiple cam lobe profiles also adds substantially to the total package size of the valve control system, such that there are various engines which cannot utilize (i.e., don't have room for) the known dual event type valve control systems.

In recent years there has been renewed interest in providing internal combustion engines which utilize the Miller cycle combustion process which, as is well known to those skilled in the art, differs from the traditional and more commonly-used Otto cycle in one significant way. In the Miller cycle, the intake valve is left open longer than normal, i.e., the intake valve remains open during approximately the first twenty percent of the compression stroke of the piston. In the conventional Otto cycle engine, the intake valve would close at approximately the beginning of the compression stroke of the piston.

However, it is not considered acceptable simply to provide a valve control system of the fixed type in which the intake poppet valve has a valve event of greater duration (i.e., stays open during the early portion of the compression stroke), because there are various engine operating conditions under which it is preferred to operate on the conventional Otto cycle, rather than on the Miller cycle. Therefore, in utilizing the Miller cycle and achieving the benefits thereof, it is considered very desirable to be able to select between the "normal" event length (as in the Otto cycle) and the event length of greater duration (for the Miller cycle). As is now well know to those skilled in the art, the "late intake valve closing" of the Miller cycle is always used in conjunction with a high boosting pressure. If the boosting pressure is provided by a supercharger (which can achieve boost pressure over all engine operating speeds), there is no need for dual valve lift, because the engine will operate only in the Miller cycle. However, if the boosting pressure is provided by a turbocharger, the engine can operate properly in the Miller cycle only after the boosting pressure has reached the required level.

At boosting pressure below the required level, only a "normal" intake closing time is required, and the dual valve event roller rocker arm is able to be "deactivated" to achieve this shorter event duration. However, as was noted previously, the need for a second cam lobe profile to achieve such a dual valve event length has prevented such a valve control system from being feasible, either economically, or in terms of packaging, for many potential engine applications.

US 2005/0000498 describes a valve arrangement for delivering EGR gas to combustion spaces in a four stroke combustion engine.

### BRIEF SUMMARY OF THE INVENTION

Accordingly, it is an object of the present invention to provide an improved valve control system for an engine poppet valve which can provide a dual valve event length, without the additional manufacturing cost and packaging space required for multiple cam lobe profiles.

It is a more specific object of the present invention to provide such an improved valve control system which is able to provide a dual valve event length from a single cam lobe.

The above and other objects of the invention are accomplished by the provision of a valve control system for an internal combustion engine including a cylinder head and a poppet valve moveable relative to the cylinder head between open and closed positions. A camshaft has a cam profile including a base circle portion and a lift portion. The valve control system includes a rocker arm assembly comprising a rocker arm defining a valve pad in engagement with a stem tip portion of the poppet valve, and defining a pivot location about which the rocker arm pivots to move the poppet valve between the open and closed positions. The rocker arm includes a first cam follower adapted to be engaged by the lift portion of the cam profile as the camshaft rotates.

The rocker arm includes a second cam follower disposed to be engaged by the lift portion of the cam profile at approximately the same time the lift portion of the cam profile moves out of engagement with the first cam follower. The second cam follower is moveable relative to the rocker arm between an activated position in which engagement with the lift portion of the cam profile maintains the poppet valve in the open position, and a deactivated position in which engagement with the lift portion of the cam profile does not maintain the poppet valve in the open position. The valve control system is characterised in that said cam profile is arranged such that the velocity of the poppet valve is the same when said lift portion moves out of engagement with said first cam follower as when said lift portion moves into engagement with said second cam follower.

### BRIEF DESCRIPTION OF THE DRAWINGS

FIG. 1 is a somewhat schematic, simplified, axial cross-section of the valve control system of the present invention.

FIG. 2 is an external, perspective view of a rocker arm assembly which comprises the key element of the valve control system of the present invention.

FIG. 3 is an enlarged, fragmentary view, partly broken-away, illustrating the latching mechanism of the valve control system of the present invention.

FIG. 4 is a graph of valve lift (in millimeters) as a function of camshaft rotation (in degrees) indicating the various lift curves resulting from the valve control system of the present invention.

### DETAILED DESCRIPTION OF THE PREFERRED EMBODIMENT

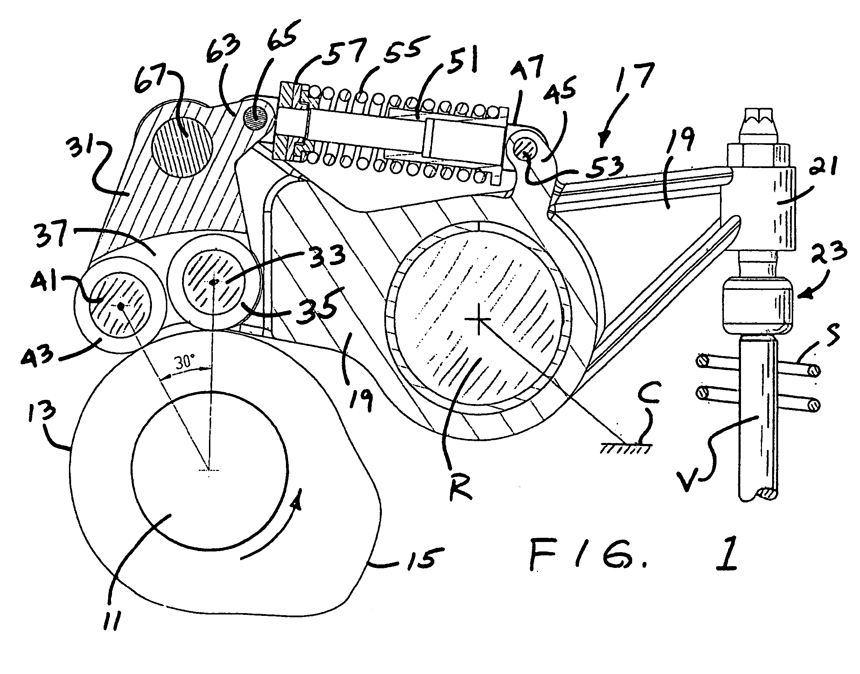

Referring now to the drawings, which are not intended to limit the invention, FIG. 1 illustrates a valve control system made in accordance with the present invention, for use in controlling an engine poppet valve of an internal combustion engine. It should be noted that FIG. 1 illustrates only the cylinder head (and then only schematically) including the valve control system of the present invention, but does not include any portion of the rest of the engine, such as the engine cylinder block, cylinders, or pistons.

The valve control system as shown in FIG. 1 includes a cylinder head C, which in FIG. 1 is merely represented by a conventional "ground" symbol. The cylinder head C has a line extending from the ground symbol "C" to an axis of rotation of a rocker shaft R, simply to illustrate that the rocker shaft R is fixed, but rotatable relative to the cylinder head C. The valve control system further includes a camshaft 11, which is also fixed, relative to the cylinder head C for rotation about the axis of the camshaft 11. The camshaft 11 defines a plurality of cam profiles (only one of which is shown in FIG. 1), each cam profile including a base circle portion 13 and a lift portion 15. It is believed to be within the ability of those skilled in the art to design and configure the lift portion 15 to achieve the dual valve event length which is one object of the valve control system of the present invention. However, in accordance with one important aspect of the present invention, there is provided only a single cam profile (cam lobe) per cylinder.

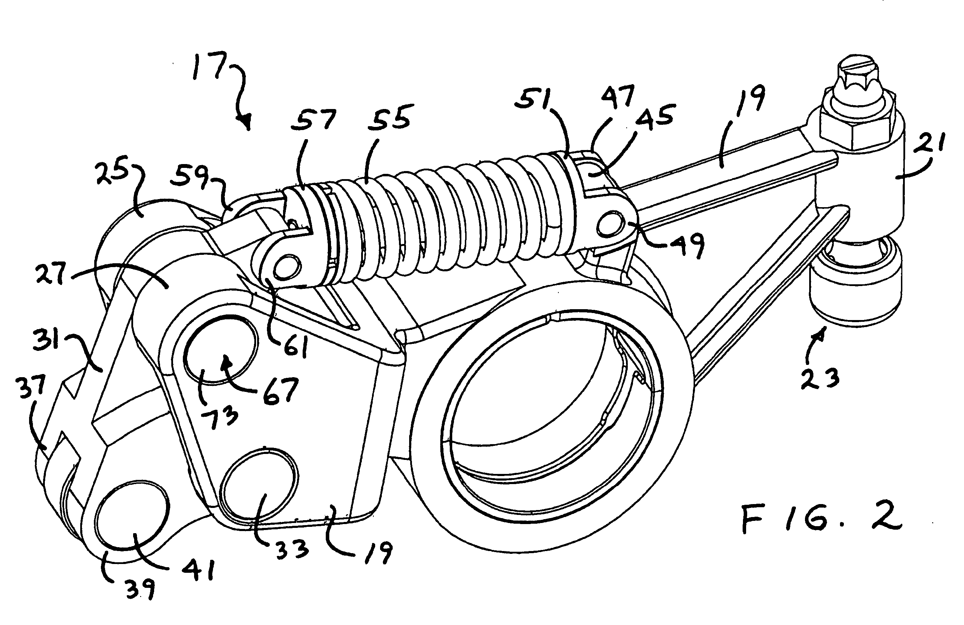

Referring now to FIG. 2 in conjunction with FIG. 1, the valve control system of the present invention comprises a rocker arm assembly, generally designated 17, including a rocker arm member 19 which, in the subject embodiment, and by way of example only, comprises a single, cast member. Disposed toward the right end of the rocker arm member 19 is a cylindrical portion 21 which is preferably formed integrally with the rocker arm member 19. The cylindrical portion 21 receives and supports a valve tip pad assembly 23. The function of the pad assembly 23 is to engage, in a known manner, the stem tip portion of an engine poppet valve V, shown only fragmentarily in FIG. 1. As is conventional, the engine poppet valve V is surrounded by a valve return spring S. The conventional spring retainer, against which the upper end of the return spring S would be seated, is omitted from FIG. 1 for ease of illustration.

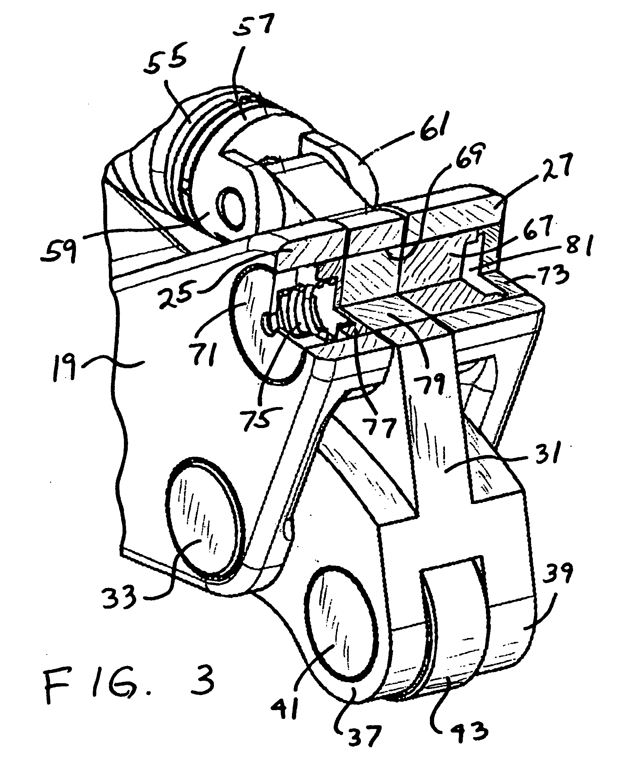

As may best be seen in FIG. 2, the rocker arm member 19 includes, toward its left end in FIGS. 1 and 2, a somewhat U-shaped portion comprising a pair of generally parallel side walls 25 and 27, the side walls 25 and 27 being shown herein, by way of example only, as being a "mirror image" of each other. Disposed between the parallel side walls 25 and 27 is a generally triangular-shaped follower support member 31. In accordance with one important aspect of the invention, the follower support member 31 is fixed relative to the rocker arm member 19, by means of a cylindrical pin member 33, shown in axial cross section in FIG. 1, but with one axial end thereof being shown in FIG. 2, and the opposite axial end of the pin member 33 being shown in FIG. 3. Disposed about the pin member 33 is an annular first cam follower 35. The significance of the term "first" in regard to the cam follower 35 will be explained in greater detail subsequently.

As also may best be seen in FIG. 2, the follower support member 31 includes, toward its lower portion, a pair of parallel side walls 37 and 39 such that, in FIG. 1, only the side wall 37 is visible, but in both of FIGS. 2 and 3, both side walls 37 and 39 are visible. Extending through appropriate openings in the side walls 37 and 39 is a cylindrical pin member 41, and as was the case for the pin member 33, the pin member 41 is shown in cross-section in FIG. 1, while in FIGS. 2 and 3, the opposite axial end surfaces of the pin member 41 are visible. Disposed about the pin member 41 is an annular second cam follower 43, the significance of the term "second" to be described subsequently. Preferably, although not essential to the present invention, the cam followers 35 and 43 both define axes which are approximately equidistant from the axis of rotation of the camshaft 11. Furthermore, the cam followers 35 and 43 are shown as being of equal diameters, such that when the valve control system is operating "on the base circle" as is shown in FIG. 1, both of the cam followers 35 and 43 are in engagement with the base circle portion 13.

However, and as an alternative arrangement within the scope of the present invention, the first cam follower 35 may be disposed slightly closer to the axis of rotation of the camshaft 11 than is the second cam follower 43. In the case of such an arrangement, and as will be understood by those skilled in the art, when the valve control system is operating "on the base circle", only the first cam follower 35 will be in engagement with the base circle portion 13, while the second cam follower 43 will be spaced apart from the base circle portion 13 by a distance equal to the amount by which the axis of the pin member 41 is further (than the axis of the pin member 33) from the axis of rotation of the camshaft 11.

Referring still to both FIGS. 1 and 2, the rocker arm member 19 includes a mounting portion 45 which extends upwardly and slightly to the left in FIG. 1. Oppositely disposed about the mounting portion 45 is a pair of ears 47 and 49 (see FIG. 2) formed integrally with a spring seat member 51, the spring seat member 51 being mounted for pivotal movement relative to the mounting portion 45 by means of a pin member 53 (see FIG. 1) which passes through appropriate openings in the mounting portion 45 and in the ears 47 and 49.

Surrounding a reduced diameter portion of the spring seat member 51 is a lost motion spring 55, the function of which will be described subsequently. The left end (in FIGS. 1 and 2) of the lost motion spring 55 is seated against a spring seat member 57, which includes a smaller diameter portion telescopically received within an opening in the spring seat member 51. The spring seat member 57 includes a pair of ears 59 and 61 (labeled only in FIGS. 2 and 3) disposed upon opposite sides of a mounting portion 63, formed integrally with the follower support member 31. A pin member 65 passes through appropriate openings in the ears 59 and 61, and in the mounting portion 63, such that the spring seat member 57 is pivotally mounted relative to the follower support member 31. The function of the entire assembly just described, to be generically referred to hereinafter as the "lost motion spring 55", will be described subsequently.

Referring still to FIGS. 1 and 2, the rocker arm assembly 17 is shown in its latched condition, in which a generally cylindrical latching mechanism 67 is received within mating openings in the sidewalls 25 and 27, and in the follower support member 31. Therefore, in the latched condition as shown in FIGS. 1 and 2 (also referred to hereinafter as the "activated mode"), the follower support member 31 is latched to be "fixed" relative to the rocker arm member 19. In other words, in the latched condition, the follower support member 31 cannot pivot, relative to the rocker arm member 19, about the axis of the pin member 33, but instead, the follower support member 31 remains in the position shown in FIG. 1, relative to the rocker arm member 19.

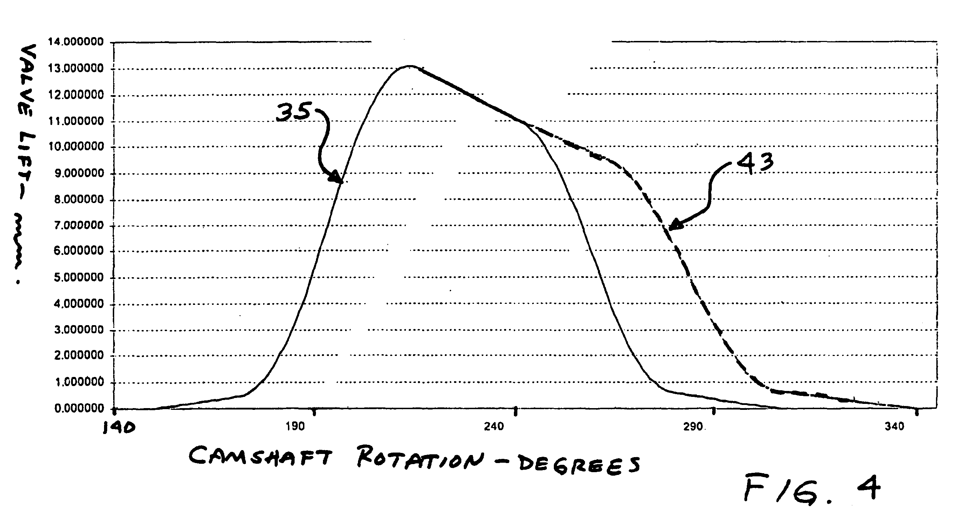

Referring now also to FIG. 4, it may be seen that, as the camshaft 11 rotates (counterclockwise, see arrow in FIG. 1), the lift portion 15 comes into engagement with the first cam follower 35, causing the rocker arm assembly 17 to pivot about the axis of the rocker shaft R and "lift" the engine poppet valve V (i.e., move it downward in FIG. 1 toward an open position). Thus, in FIG. 4, the lift curve labeled "35" represents the lift which occurs when the lift portion 15 of the camshaft 11 engages the first cam follower 35. The peak of the curve labeled "35" corresponds to the maximum valve lift (i.e., the largest opening of the engine poppet valve V).

As the camshaft 11 continues to rotate, with the rocker arm assembly 17 in the latched condition, the lift portion 15 then comes into engagement with the second cam follower 43 at approximately the same time that the lift portion 15 is moving out of engagement with the first cam follower 35. When the second cam follower 43 is engaged by the lift portion 15, the rocker arm assembly 17 remains pivoted about the axis of the rocker shaft R, in the lift position of the engine poppet valve V. The lift curve labeled "43" in FIG. 3 represents the lift of the engine poppet valve V which occurs when the lift portion 15 engages the second cam follower 43. Therefore, the valve event is represented by the total area under the combination of the curves 35 and 43, and it may be seen that the total valve event duration is from about 155 degrees of camshaft rotation to about 340 degrees of camshaft rotation. In the subject embodiment, but by way of example only, the lift curves 35 and 43 are somewhat different, for reasons to be described subsequently.

One important aspect of implementing the present invention is that the valve event (and the cam profile) has to be designed such that the contact between the lift portion 15 and the first cam follower 35 has to be transferred from the first cam follower 35 to the second cam follower 43 when the velocity of the poppet valve V, as controlled by the first cam follower 35, is equal to the velocity of the poppet valve V, as controlled by the second cam follower 43. This aspect of the design is illustrated in the graph of FIG. 4 in which there is a straight line extending from the peak of the curve "35" and extending downward and to the right, where it separates into the downwardly-extending portion of the curve "35" and the dashed curve "43". When the lift curve is a straight line, as shown in FIG. 4, the valve velocity is constant, such that the valve velocity is the same when the lift portion 15 leaves engagement with the first cam follower 35 as when the lift portion 15 begins engagement with the second cam follower 43.

As is shown in FIG. 1, the first and second cam followers 35 and 43 are separated by a rotational angle (measured from the axis of the camshaft 11) of about 30°, by way of example only. Thus, in FIG. 4 the lift curves 35 and 43 are also offset from each other by a camshaft rotation angle of about 30°, which may best be seen by comparing the "descent" of the curve 35 (reaching zero lift at about 310 degrees) with the descent of the curve 43 (which reaches zero lift at about 340 degrees).

Under various engine operating conditions, it is desirable not to have the dual valve event length illustrated in FIG. 4 by the combination of the lift curves "35" and "43" but instead, to have only a single, normal valve event length (represented by only the curve 35). When the engine is operating under those predetermined conditions, the latch member 67 is retracted from the position shown in FIGS. 1 and 2 to an unlatched condition shown in FIG. 3, to which reference will now be made. What was previously referred to as the "latching mechanism 67" may be seen in FIG. 3 to comprise a number of parts, including the actual latch member 67, slidably disposed within a bore 69, defined cooperatively by the side walls 25 and 27 and the follower support member 31. The ends of the bore 69 are sealed, hydraulically, by a pair of plug members 71 and 73. Seated against the plug member 71 is a biasing spring 75, biasing an adjacent spacer member 77 to the position shown in FIG. 3.

Also disposed within the bore 69 is another spacer member 79, having an axial length substantially equal to the width of the adjacent portion of the follower support member 31. Finally, the bore 69 and the latch member 67 and the plug member 73 cooperate to define a pressure chamber 81 such that, when control pressure is introduced into the pressure chamber 81 (through a suitable passage, not shown, in the side wall 27), the latch member is biased to the left in FIG. 3, overcoming the biasing force of the biasing spring 75. The "control pressure" would typically comprise oil pressure from an engine oil pump, controlled by an appropriate solenoid valve, not shown herein, but now well known to those skilled in the art for controlling the latching of valve deactivation lash adjusters, etc. When the chamber 81 is pressurized, the latch member 67 now couples the side wall 27 of the rocker arm member 19 to the follower support member 31, while at the same time, the spacer member 79 now couples the side wall 25 to the follower support member 31, to achieve the latched ("dual event length" or "activated") condition.

If the engine microprocessor determines (as a function of engine speed, engine load, and boost pressure) that the shorter valve event is more appropriate, the control pressure is drained from the pressure chamber 81, the biasing spring 75 will return the latch member 67 and the spacer members 77 and 79 to the positions shown in FIG. 3, i.e., the unlatched ("deactivated") condition. Therefore, at various times, the engine microprocessor would determine if the engine should, instantaneously, operate on the Miller cycle (i.e., in the latched condition), or operate on the normal Diesel cycle (i.e., in the unlatched condition).

When the latch member 67 is no longer in engagement with both the side walls 25 and 27 and the follower support member 31 (the unlatched condition or the "deactivated mode" of FIG. 4), the follower support member 31 is then free to pivot, relative to the rocker arm member 19, in a clockwise direction (in FIG. 1) about the axis of rotation of the pin member 33. Therefore, in the unlatched condition, as the camshaft 11 rotates, the lift portion 15 engages the first cam follower 35, resulting in only the lift curve "35" (only the solid line curve as shown in FIG. 4) and as described previously.

However, when the rocker arm assembly 17 is in the unlatched condition (deactivated mode), engagement of the lift portion 15 with the second cam follower 43 will merely cause the follower support member 31 to pivot about the axis of the cylindrical pin member 33, and compress the lost motion spring 55, but will not result in the lift curve "43" shown in FIG. 3. Instead, with the lift portion 15 coming out of engagement with the first cam follower 35, the engine poppet valve V will move from its open position toward its closed position (going down the slope of the solid line lift curve "35" toward the zero lift condition). As is typical in these types of valve control systems, the lost motion spring 55 exerts less biasing force than does the valve return spring S, such that the lost motion spring 55 is compressed, but the force of the valve return spring S is not overcome, and biases the engine poppet valve V toward its closed position.

Although the present invention is illustrated and described in connection with a valve gear train of the "center-pivot" type, those skilled in the art will understand that the invention is not so limited, and the invention could also be utilized in connection with an "end-pivot" type valve gear train. In such an "end-pivot" type arrangement, one axial end of the rocker arm would engage the valve stem tip portion (as in this embodiment), while the other axial end would pivot upon a "fulcrum point" such as an hydraulic lash adjuster. In this type of valve gear train, the two cam followers would be disposed intermediate the axially opposite ends.

The invention has been described in great detail in the foregoing specification, and it is believed that various alterations and modifications of the invention will become apparent to those skilled in the art from a reading and understanding of the specification. It is intended that all such alterations and modifications are included in the invention, insofar as they come within the scope of the appended claims.

## Claims

1. A valve control system for an internal combustion engine including a cylinder head (C), and a poppet valve (V) moveable relative to said cylinder head between open and closed (FIG. 1) positions; a camshaft (11) having a cam profile including a base circle portion (13) and a lift portion (15); said valve control system including a rocker arm assembly (17) comprising a rocker arm (19) defining a valve pad (23) in engagement with a stem tip portion of said poppet valve and defining a pivot location (R) about which said rocker arm (19) pivots to move said poppet valve (V) between said open and closed "positions; said rocker arm (19) including a first cam follower (35) adapted to be engaged by said lift portion (15) of said cam profile as said camshaft (11) rotates, wherein:
(a) said rocker arm (19) includes a second cam follower (43) disposed to be engaged by said lift portion (15) of said cam profile at approximately the same time said lift portion (15) of said cam profile moves out of engagement with said first cam follower (35);
(b) said second cam follower (43) being moveable relative to said rocker arm (19) between an activated position (FIG. 1) in which engagement with said lift portion (15) of said cam profile maintains said poppet valve (V) in said open position, and a deactivated position (FIG. 3) in which engagement with said lift portion (15) of said cam profile does not maintain said poppet valve (V) in said open position,
**characterised in that**:
said cam profile is arranged such that the velocity of the poppet valve (V) is the same when said lift portion (15) moves out of engagement with said first cam follower (35) as when said lift portion (15) moves into engagement with said second cam follower (43).

2. A valve control system as claimed in claim 1, **characterized by** said rocker arm (19) having said valve pad (23) disposed at one axial end thereof, and said first cam follower (35) being disposed toward the opposite axial end thereof, and said pivot location (R) being disposed intermediate said valve pad (23) and said first cam follower (35).

3. A valve control system as claimed in claim 1, **characterized by** said second cam follower (43) including a lost, motion spring (55), biasing said second cam follower (43) toward said activated position (FIG. 1), the force of said lost motion spring (55) being less than the force of a valve return spring (S) operably associated with said poppet valve (V), and tending to bias said poppet valve toward its closed position (FIG. 1).

4. A valve control system as claimed in claim 3, **characterized by** said second cam follower (43) including a latching mechanism (67), moveable between a latched condition (FIG. 2) operable to maintain said second cam follower in said activated position (FIG. 1), and an unlatched condition (FIG. 3) in which said second cam follower (43) moves to said deactivated position in opposition to the force of said lost motion spring (55).

5. A valve control system as claimed in claim 4, **characterized by** said second cam follower (43) being rotatably supported by a follower support member (31) which is mounted to be pivotable relative to said first cam follower (35), to move said second cam follower (43) between said activated (FIG. 1) and said deactivated (FIG. 3) positions.

6. A valve control system as claimed in claim 1, **characterized by** each of said first (35) and second (43) cam followers defining axes of rotation, oriented substantially parallel to an axis defined by said camshaft (11), whereby said axes of rotation of said cam followers are arranged sequentially, with said axis of rotation of said first cam follower (35) occurring first, in the direction of rotation of said lift portion (15), followed by said axis of rotation of said second cam follower (43).

7. A valve control system as claimed in claim 6, **characterized by** said first (35) and second (43) cam followers being disposed immediately adjacent each other, and separated by an angle of rotation of the camshaft (11) in the range of about thirty degrees.

## Patentansprüche

1. Ventilsteuersystem für einen Verbrennungsmotor aufweisend ein Zylinderkopf (C), ein Tellerventil (V), das relativ zum Zylinderkopf zwischen einer offenen und geschlossenen Position beweglich ist (Fig. 1); einer Nockenwelle (11) aufweisend eines Nockenprofils mit einem im wesentlichen kreisförmigen Grundformbereichs (13) und eines Hubbereichs (15); das Ventilsteuerungssystem aufweisend eine Kipphebelvorrichtung (17) mit einem Kipphebel (19), der einen Ventilfuß (23) definiert, der mit dem Schaftspitzenabschnitt des Tellerventils in Eingriff steht und eine Schwenkstelle (R) definiert, um die der Kipphebel (19) dreht, um das Tellerventil (V) zwischen der offenen und der geschlossenen Position zu bewegen; der Kipphebel (19) mit einem ersten Nockenstößel (35) ist so angepasst, dass er mit dem Hubbereich (15) des Nockenprofils in Eingriff steht, wenn sich die Nockenwelle (11) dreht, wobei:
(a) der Kipphebel (19) einen zweiten Nockenstößel (43) aufweist, der derart angordnet ist, dass er mit dem Hubbereich (15) des Nockenprofils ungefähr gleichzeitig in Eingriff steht, wie der Hubbereich (15) des Nockenprofils aus dem Eingriff mit dem ersten Nockenstößel (35) gelöst wird;
(b) der zweite Nockenstößel (43), der relativ zum Kipphebel (19) zwischen einer aktivierten Lage (Fig. 1) beweglich angeordnet ist, in welcher der Eingriff mit dem Hubbereich (15) des Nockenprofils das Tellerventil (V) in der geöffneten Position beibehalten wird und einer deaktivierte Lage (Fig. 3), in welcher der Eingriff mit dem Hubbereich (15) des Nockenprofils das Tellerventil (V) nicht in der geöffneten Lage bestehen bleibt und das Nockenprofil so liegt, dass die Geschwindigkeit des Tellerventils (V), **dadurch gekennzeichnet, dass**:
das Nockenprofil derart angeordnet ist, dass die Geschwindigkeit des Tellerventils (V) gleich ist, wenn der Hubbereich (15) sich aus dem Eingriff mit dem ersten Nockenstößel (35) bewegt, wie wenn der Hubbereich (15) sich in den Eingriff mit dem zweiten Nockenstößel (43) bewegt.

2. Ventilsteuersystem gemäß Anspruch 1, dadurch gekennezichent, dass bei dem der Kipphebel (19), der den an einem Axialende angeordneten Ventilfuß (23) umfasst und der erste Nockenstößel (35) an dem entgegengesetzten Axialende angeordnet ist und die Schwenkstelle (R) zwischen Ventilfuß (23) und dem ersten Nockenstößel (35) langeordnet ist.

3. Ventilsteuerungssystem gemäß Anspruch 1, **dadurch gekennzeichnet, dass** der zweite Nockenstößel (43) eine Leerlauffeder (55) aufweist, welche den zweiten Nockenstößel (43) in die aktivierte Lage vorspannt (Fig. 1), wobei die Kraft der Leerlauffeder (55) geringer als die Kraft einer Ventilrückstellfeder (S) ist, die mit dem Tellerventil (V) in Eingriff steht, und das Tellerventil in seine näheste Position (Fig. 1) vorspannt.

4. Ventilsteuerungssystem gemäß Anspruch 3, **dadurch gekennzeichnet, dass** die zweite Nockenwelle (43) eine Verriegelungsvorrichtung (67) aufweist, die zwischen einem verriegelten Zustand (Fig. 2), bei dem die zweite Nockenwelle in der aktivierten (Fig. 1) Lage gehalten wird und einem unverriegelten Zustand (Fig. 3), in dem die zweite Nockenwelle (43) entgegen der Kraft der Leerlauffeder (55) zu der nicht aktivierten Position bewegt wird.

5. Ventilsteuerungssystem gemäß Anspruch 4, **dadurch gekennzeichnet, dass** der zweite Nockenstößel (43) über ein Führungsunterstützungselement (31) drehunterstützt ist, das relativ zum ersten Nockenstößel drehbar gelagert ist (35), um den zweiten Nockenstößel (43) zwischen dem aktivierten (Fig. 1) und deaktivierten Zustand (Fig. 3) zu bewegen.

6. Ventilsteuerungssystem gemäß Anspruch 1, **dadurch gekennzeichnet, dass** sowohl der erste (35) als auch der zweite Nockenstößel (43) Rotationsachsen aufweisen, die im wesentlichen parallel zu einer durch die Nockenwelle (11) definierten Achse ausgerichtet sind, wobei die Rotationsachsen der Nockenstößel sequentiell angeordnet sind, wobei die Rotationsachse des ersten Nockenstößels (35) zuerst in der Rotationsrichtung des Hubbereichs (15) liegt, worauf die Rotationsachse des zweiten Nockenstößels folgt (43).

7. Ventilsteuerungssystem gemäß Anspruch 6, **dadurch gekennzeichnet, dass** der erste (35) und der zweite (43) Nockenstößel unmittelbar nebeneinander angeordnet sind und durch einen Rotationswinkel der Nockenwelle (11) im Bereich von ungefähr 30 Grad getrennt sind.

## Revendications

1. Système de commande de soupape pour un moteur à combustion interne incluant une tête de cylindre (C) et une soupape-champignon (V) mobile par rapport à ladite tête de cylindre entre des positions ouverte et fermée (FIG. 1) ; un arbre à cames (11) ayant un profil de came incluant une portion circulaire de base (13) et une portion de soulèvement (15) ; ledit système de commande de soupape incluant un ensemble de culbuteur (17) comprenant un culbuteur (19) définissant un patin de soupape (23) en engagement avec une portion de pointe de corps de ladite soupape-champignon et définissant un emplacement de pivot (R) autour duquel ledit culbuteur (19) pivote pour déplacer ladite soupape-champignon (V) entre lesdites positions ouverte et fermée ; ledit culbuteur (19) incluant un premier poussoir de soupape (35) adapté pour être engagé par ladite portion de soulèvement (15) dudit profil de came alors que ledit arbre à cames (11) tourne, dans lequel :
(a) ledit culbuteur (19) inclut un second poussoir de soupape (43) disposé pour être engagé par ladite portion de soulèvement (15) dudit profil de came environ en même temps s que ladite portion de soulèvement (15) dudit profil de came sort de l'engagement avec ledit premier poussoir de soupape (35) ;
(b) ledit second poussoir de soupape (43) étant mobile par rapport audit culbuteur (19) entre une position activée (FIG. 1) dans laquelle l'engagement avec ladite portion de soulèvement (15) dudit profil de came maintient ladite soupape-champignon (V) dans ladite position ouverte, et une position désactivée (FIG. 3) dans laquelle l'engagement avec ladite portion de soulèvement (15) dudit profil de came ne maintient pas ladite soupape-champignon (V) dans ladite position ouverte, **caractérisé en ce que** :
ledit profil de came est agencé de sorte que la vitesse de la soupape-champignon (V) est la même lorsque ladite portion de soulèvement (15) sort de l'engagement avec ledit premier poussoir de soupape (35) que lorsque ladite portion de soulèvement (15) se déplace en engagement avec ledit second poussoir de soupape (43).

2. Système de commande de soupape selon la revendication 1, **caractérisé par** ledit culbuteur (19) ayant ledit patin de soupape (23) disposé à une extrémité axiale de celui-ci, et ledit premier poussoir de soupape (35) étant disposé vers l'extrémité axiale opposée de celui-ci, et ledit emplacement de pivot (R) étant disposé entre ledit patin de soupape (23) et ledit premier poussoir de soupape (35).

3. Système de commande de soupape selon la revendication 1, **caractérisé par** ledit second poussoir de soupape (43) incluant un ressort de mouvement perdu (55) inclinant ledit second poussoir de soupape (43) vers ladite position activée (FIG. 1), la force dudit ressort de mouvement perdu (55) étant inférieure à la force d'un ressort de retour de soupape (S) associé de manière opérationnelle à ladite soupape-champignon (V), et ayant tendance à incliner ladite soupape-champignon vers sa position fermée (FIG. 1).

4. Système de commande de soupape selon la revendication 3, **caractérisé par** ledit second poussoir de soupape (43) incluant un mécanisme de verrouillage (67) mobile entre une condition verrouillée (FIG. 2) pouvant être opérée pour maintenir ledit second poussoir de soupape dans ladite position activée (FIG. 1), et une condition déverrouillée (FIG. 3) dans laquelle ledit second poussoir de soupape (43) se déplace vers ladite position désactivée par opposition à la force dudit ressort de mouvement perdu (55).

5. Système de commande de soupape selon la revendication 4, **caractérisé par** ledit second poussoir de soupape (43) qui est supporté à rotation par un élément de support de poussoir (31) qui est monté pour être pivotant par rapport audit premier poussoir de soupape (35) afin de déplacer ledit second poussoir de soupape (43) entre ladite position activée (FIG. 1) et ladite position désactivée (FIG. 3).

6. Système de commande de soupape selon la revendication 1, **caractérisé par** chacun desdits premier (35) et second (43) poussoirs de soupape définissant des axes de rotation orientés essentiellement parallèlement à un axe défini par ledit arbre à cames (11), moyennant quoi lesdits axes de rotation desdits poussoirs de soupape sont agencés de manière séquentielle, avec ledit axe de rotation dudit premier poussoir de soupape (35) survenant en premier dans la direction de rotation de ladite portion de soulèvement (15), suivi dudit axe de rotation dudit second poussoir de soupape (43).

7. Système de commande de soupape selon la revendication 6, **caractérisé par** lesdits premier (35) et second (43) poussoirs de soupape qui sont disposés de manière immédiatement adjacente l'un à l'autre et séparés par un angle de rotation de l'arbre à cames (11) dans la plage d'environ trente degrés.
